# EUROPÄISCHE PATENTANMELDUNG

(11) **EP 0 618 703 A2**
(43) Veröffentlichungstag der Anmeldung: **05.10.1994**
(21) Anmeldenummer: 94103439.9
(22) Anmeldetag: 07.03.1994
(51) Int. Cl.: H04L 12/56, H04L 12/18, H04Q 11/04

(54) **Verfahren für Punkt-zu-Mehrpunkt-Verbindungen in selbstroutenden ATM-Koppelfeldern**

(30) Priorität: 15.03.1993 DE 4308174
(71) Anmelder: SIEMENS AKTIENGESELLSCHAFT, D-80333 München (DE)
(72) Erfinder: Storm, Jürgen, Ing. grad., D-82178 Puchheim (DE)

(57) **Zusammenfassung**

Punkt-zu-Mehrpunkt-Verbindungen - also Verbindungen von einer Sende-/Empfangseinrichtung (GPO) zu mehreren Sende-/Empfangseinrichtungen (GP1,GP2,...,GPn) - können beim Stand der Technik nur mit einer hohen dynamischen Belastung eines Einganges des jeweiligen ATM-Koppelfeldes durchgeführt werden. Das erfindungsgemäße Verfahren schafft hier Abhilfe, indem eine sogenannte virtuelle Kette von Verbindungen aufgebaut wird, wo von einer ersten Sende-/Empfangseinrichtung (GPO) ausgehend Nachrichtenzellen zu einer Gruppe von mehreren Sende-/Empfangseinrichtungen (GP1,GP2,...,GPn) gesendet, in der ersten Sende-/Empfangseinrichtung (GP1) der Gruppe von mehreren Sende-/Empfangseinrichtungen (GP1,GP2,...,GPn) dupliziert und über das ATM-Koppelfeld zur nächsten Sende-/Empfangseinrichtung (GP2) der Gruppe von mehreren Sende-/Empfangseinrichtungen (GP1,GP2,...,GPn) gesendet werden. In den weiteren Sende-/Empfangseinrichtungen wird in entsprechender Weise vorgegangen, bis das Ende der virtuellen Kette von Verbindungen, d.h. die letzte Sende-/Empfangseinrichtung (GPn) der Gruppe von mehreren Sende-/Empfangseinrichtungen (GP1,GP2,...,GPn) erreicht ist.

## Beschreibung

Die Erfindung betrifft ein Verfahren gemäß dem Oberbegriff des Patentanspruchs 1.

Aus der US-Patentschrift (US-PS 4,491,945) ist ein Verfahren zum Aufbau von virtuellen Verbindungen bekannt. Diese Verbindungen werden über ein ATM-Koppelfeld durchgeschaltet. Bei diesem bekannten Verfahren wird eine Verbindung zwischen einem A-Teilnehmer und einem B-Teilnehmer aufgebaut, indem eine Signalisierungszelle vor der eigentlichen Datenübertragung vom A-Teilnehmer zum B-Teilnehmer ausgesendet wird. Diese Signalisierungszelle enthält dabei einen Zellenkopf, in dem eine virtuelle Kanalnummer abgespeichert ist. Im Informationsteil der Signalisierungszelle ist die Zieladresse für die betreffende Verbindung abgelegt. Anhand dieser Zieladresse legt ein dem betreffenden ATM-Koppelfeld zugehöriger Prozessor den für die aufzubauende Verbindung zu benutzenden Ausgang des ATM-Koppelfeldes sowie die für diesen Ausgang gültige virtuelle Kanalnummer fest. Diese virtuelle Kanalnummer wird dann während der eigentlichen Datenübertragung von den Nachrichtenzellen im Zellenkopf benutzt, um über den betreffenden Ausgang im ATM Koppelfeld dasselbe in Richtung B-Teilnehmer zu verlassen.

Vorzugsweise werden mit einem derartigen Verfahren Punkt-zu-Punkt-Verbindungen - d.h. Verbindungen, die von einem A-Teilnehmer zu einem B-Teilnehmer aufgebaut werden - durchgeführt. Für Punkt-zu-Mehrpunkt-Verbindungen - d.h. Verbindungen, die von einem A-Teilnehmer zu mehreren B-Teilnehmern aufgebaut werden - kann ein derartiges Verfahren jedoch nicht mehr benutzt werden, da in diesem Fall die Adresse mehrerer Endteilnehmer in der Zelle mitgeführt werden müßte.

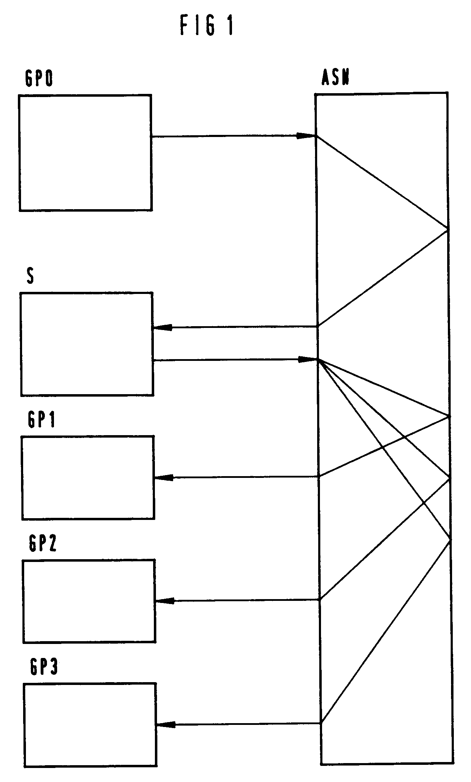

Eine Möglichkeit, das bekannte Verfahren auch für Punkt-zu-Mehrpunkt-Verbindungen zu nutzen, ist in Figur 1 aufgezeigt. Dabei soll eine Verbindung von einer ersten Sende-/Empfangseinrichtung GP0 zu einer Gruppe von mehreren Sende-/Empfangseinrichtungen GP1, GP2, GP3 aufgebaut werden. Die erste Sende-/Empfangseinrichtung GP0 sowie die Gruppe von mehreren Sende-/Empfangseinrichtungen GP1, GP2, GP3 stellen in diesem Fall Einrichtungen eines Kommunikationssystems dar und können aber auch Einrichtungen im Sinne von Endteilnehmern repräsentieren. Bei diesem Stand der Technik wird zu diesem Zweck ein zentralisierter Server S in die Verbindung einbezogen. In diesem Fall wird zunächst von der ersten Sende-/Empfangseinrichtung GPO eine Verbindung über das ATM-Koppelfeld ASN zu dem zentralisierten Server S aufgebaut. Dieser vervielfältigt an seinem Ausgang die jeweiligen Nachrichtenzellen und sendet sie wiederum über das ATM-Koppelfeld ASN zu den Sende-/Empfangseinrichtungen GP1, GP2, GP3 weiter. Problematisch an einer derartigen Vorgehensweise ist jedoch, daß der Eingang des ATM-Koppelfeldes ASN, der mit dem zentralisierten Server S verbunden ist, dynamisch sehr belastet ist.

Der Erfindung liegt die Aufgabe zugrunde, ein Verfahren anzugeben, in dem Punkt-zu-Mehrpunkt-Verbindungen in einem ATM-Koppelfeld ohne Einschränkung der Dynamik durchgeschaltet werden.

Die Erfindung wird ausgehend vom Oberbegriff des Patentanspruchs 1 durch die kennzeichnenden Merkmale dieses Patentanspruches gelöst.

Vorteilhaft an der Erfindung ist das Erstellen einer virtuellen Kette von Verbindungen, indem die Nachrichtenzellen in den Koppelfeldanschlußmodulen der jeweiligen Sende-/Empfangseinrichtungen dupliziert werden. Damit wird insbesondere in vorteilhafter Weise erreicht, daß die Anzahl der im Zellenkopf der Nachrichtenzellen mitzuführenden Verbindungswegeinformationen auch am Ende der virtuellen Kette auf ein Minimum beschränkt bleibt. Erfindungsgemäß wird eine Nachrichtenzelle zum einen zu der jeweiligen Sende-/Empfangseinrichtung hin übertragen und zum anderen die duplizierte Nachrichtenzelle, d.h. eine Kopie der ursprünglichen Nachrichtenzelle, erneut über das ATM-Koppelfeld zu einer weiteren Sende-/Empfangseinrichtung weitergeleitet. Dort wird in dem dortigen Koppelfeldanschlußmodul - falls notwendig - die Nachrichtenzelle erneut dupliziert. Alle für den Verbindungsweg durch das ATM-Koppelfeld sowie für die Art der Verbindung wesentlichen Informationen sind dabei in einer ersten und zweiten Tabelle abgespeichert, die in jedem Koppelfeldanschlußmodul enthalten sind. Somit entsteht eine virtuelle Kette bis zur letzten Empfangseinrichtung.

Gemäß Anspruch 2 ist vorgesehen, daß in der von der ersten Sende /Empfangseinrichtung vor dem Übertragungsvorgang ausgehenden Signalisierungszelle Informationen über die maximal zu übertragende Bitrate, über die Adressen der Gruppe von weiteren Sende-/Empfangseinrichtungen sowie Informationen darüber, ob es sich um eine Punkt-zu-Punkt- bzw. Punkt-zu-Mehrpunkt-Verbindung handelt, enthalten sind. Damit ist der Vorteil verbunden, daß die in den jeweiligen Koppelfeldanschlußmodulen enthaltenen ersten und zweiten Tabellen bereits vor dem Übertragungsvorgang durch die Signalisierungszelle mit den entsprechenden, die Verbindung betreffende Informationen beschrieben werden.

Gemäß Anspruch 3 ist vorgesehen, daß die in der ersten Tabelle abgespeicherten Informationen Informationen bezüglich des Verbindungsweges der jeweiligen Koppelstufe des ATM-Koppelfeldes sind. Damit ist der Vorteil verbunden, daß die zu übertragenden Nachrichtenzellen lediglich durch Angabe ihrer virtuellen Kanalnummer in den jeweiligen Tabellen alle die Verbindung betreffenden Informationen besorgen können.

Gemäß Anspruch 4 ist vorgesehen, daß ein Multiplexer in den jeweiligen Koppelfeldanschlußmodulen verwendet wird, wobei auf einen Eingang des Multiplexers die duplizierte Nachrichtenzelle und auf den anderen Eingang des Multiplexers eine weitere, eine andere Verbindung betreffende Nachrichtenzelle gegeben wird. Damit ist der Vorteil verbunden, daß die betreffende Sende-/Empfangseinrichtung während des Empfangens der von der ersten Sende-/Empfangseinrichtung ausgesendeten Nachrichtenzellen selbst Nachrichtenzellen aussenden kann.

Gemäß Anspruch 5 ist vorgesehen, daß die jeweiligen Koppelfeldanschlußmodule pro Sende-/Empfangseinrichtung gedoppelt vorgesehen werden. Vorteilhaft daran ist, daß eventuell fehlerhafte Sende-/Empfangseinrichtungen somit während des Betriebes ausgetauscht werden können.

Gemäß Anspruch 6 ist vorgesehen, daß in der zweiten Tabelle des Koppelfeldanschlußmoduls der letzten Sende-/Empfangseinrichtung der virtuellen Kette eine Punktzu-Mehrpunkt-Verbindung abgespeichert ist und die duplizierte Nachrichtentzelle zur Sende-/Empfangseinrichtung hin zurückübertragen wird. Damit ist der Vorteil verbunden, daß die Güte der Übertragungs- und Durchschaltevorgänge im ATM-Koppelfeld überprüft werden können sowie das Altern der Bauteile des ATM-Koppelfeldes frühzeitig erkannt wird.

Gemäß Anspruch 7 ist vorgesehen, daß in der Sende-/Empfangseinrichtung Vergleichsprozeduren ablaufen, um zu ermitteln, ob eventuell Fehler bei der Datenübertragung aufgetreten sind. Vorteilhaft daran ist, daß über jene Vergleichsprozeduren die Güte der korrekten Datenübertragung ermittelt werden kann.

Im folgenden wird die Erfindung anhand eines Ausführungsbeispiels näher erläutert.

Es zeigen:
- Figur 1: den Stand der Technik, von dem die vorliegende Patentanmeldung ausgeht,
- Figur 2: den Verbindungsaufbau von einer Sende-/Empfangseinrichtung zu einer Gruppe von mehreren Sende-/Empfangseinrichtungen,
- Figur 3: die erfindungsgemäße Vorgehensweise in einem Koppelfeldanschlußmodul.

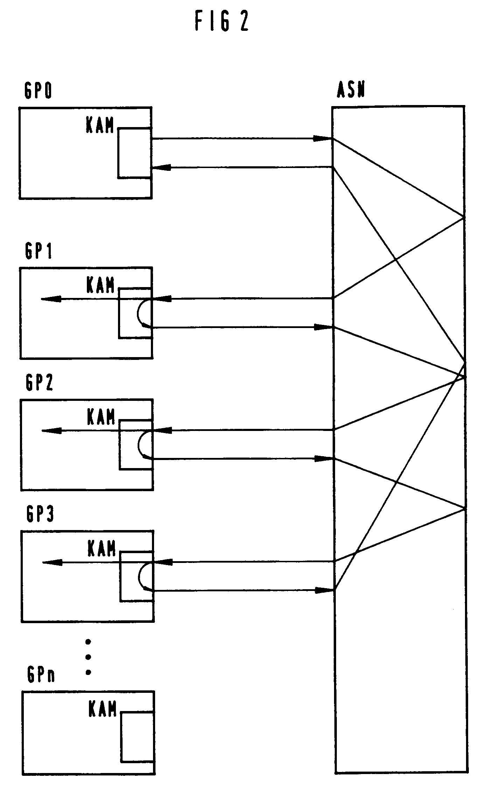

In Figur 2 ist das erfindungsgemäße Verfahren aufgezeigt. Hierbei sind mehrere Sende-/Empfangseinrichtungen GP0 ... GPn an einem ATM-Koppelfeld ASN angeschlossen. Im vorliegenden Ausführungsbeispiel soll eine erste Sende-/Empfangseinrichtung GP0 als Sendeeinrichtung fungieren. Dies kann beispielsweise die zentrale Steuereinrichtung eines Kommunikationssystems sein. Weiterhin soll die erste Sende-/Empfangseinrichtung GP0 Nachrichten im Zuge einer virtuellen Verbindung zu einer Gruppe von drei Sende-/Empfangseinrichtungen GP1, GP2, GP3 senden. Die virtuelle Verbindung wird dabei über das ATM-Koppelfeld ASN aufgebaut. Weiterhin sind in allen Sende-/Empfangseinrichtungen GP0 ... GPn Koppelfeldanschlußmodule KAM aufgezeigt, die als logisch unabhängige Schnittstelleneinheiten zu dem ATM-Koppelfeld ASN füngieren.

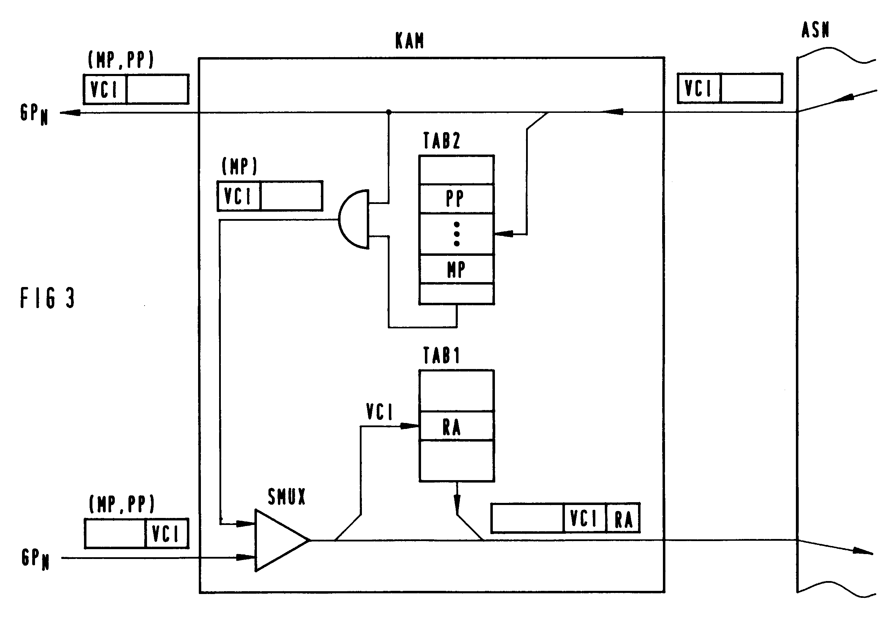

Im Ausführungsbeispiel wird nun davon ausgegangen, daß von der ersten Sende-Empfangseinrichtung GP0 eine virtuelle Verbindung zu der Gruppe von drei Sende-/Empfangseinrichtungen GP1, GP2, GP3 aufgebaut wird. Die Verhältnisse in den jeweiligen Koppelfeldanschlußmodulen KAM sind in Figur 3 aufgezeigt. Zunächst wird von der ersten Sende-/Empfangseinrichtung GP0 Signalisierungszellen zum Aufbau der virtuellen Verbindung zu den jeweiligen drei Sende-/Empfangseinrichtungen GP1, GP2, GP3 ausgesendet. Im Informationsteil dieser Signalisierungszellen sind nähere Informationen über die Art der Verbindung, in vorliegendem Ausführungsbeispiel also darüber enthalten, ob eine Punkt-zu-Mehrpunkt-Verbindung MP bzw. eine Punkt-zu-Punkt-Verbindung PP aufgebaut werden soll. Weiterhin wird hier die jeweiligen Zieladresse der jeweiligen Sende-/Empfangseinrichtung GP1, GP2 oder GP3 mitgeführt sowie Informationen darüber, mit welcher maximalen Bitrate die erste Sende-/Empfangseinrichtung GP0 die zu übertragenden Nachrichten übertragen wird. Im Zellenkopf der Signalisierungszelle wird von der ersten Sende-/Empfangseinrichtung GP0 eine virtuelle Kanalnummer VCI eingetragen. Diese virtuelle Kanalnummer VCI wird dann dem jeweiligen Verbindungsweg innerhalb des ATM-Koppelfeldes ASN zugeordnet und später während der Übertragung der Nachrichten in den Nachrichtenzellen verwendet.

Mit den im Informationsteil der Signalisierungszelle enthaltenen Informationen werden eine erste und zweite Tabelle TAB1, TAB2 des jeweiligen Koppelfeldanschlußmodules KAM der ersten Sende-/Empfangseinrichtung GP0 sowie der drei Sende-/Empfangseinrichtungen GP1, GP2, GP3 aktualisiert. Dies bedeutet, daß in der ersten Tabelle TAB1 des Koppelfeldanschlußmoduls KAM der Sende-/Empfangseinrichtung GP0 verbindungsindividuell abgespeichert wird, welchen Weg durch das ATM-Koppelfeld ASN die zu der jeweiligen Verbindung gehörenden Nachrichtenzellen nehmen sollen. Letztendlich steht also in der ersten Tabelle TAB1 der ersten Sende-/Empfangseinrichtung GP0 die Ausgangsportadresse des ATM-Koppelfeldes ASN, an dem die erste Sende-/Empfangseinrichtung GP1 der Gruppe von Sende-/Empfangseinrichtungen über das zugehörige Koppelfeldanschlußmodul KAM angeschlossen ist. In gleicher Weise wird die erste Tabelle TAB1 der ersten Sende-/Empfangseinrichtung GP1 der Gruppe von Sende-/Empfangseinrichtungen mit der Ausgangsportadresse des ATM-Koppelfeldes ASN beschrieben, an die die zweite Empfangseinrichtung GP2 der Gruppe von Sende-/Empfangseinrichtungen über das zugehörige Koppelfeldanschlußmodul KAM angeschlossen ist. Ebenso wird mit der ersten Tabelle TAB1 des Koppelfeldanschlußmoduls KAM der zweiten und dritten Sende-/Empfangseinrichtung GP2 bzw. GP3 der Gruppe von Sende-/Empfangseinrichtungen verfahren. Weiterhin wird die zweite Tabelle TAB2 der Koppelfeldanschlußmodule KAM aller drei Sende-/Empfangseinrichtungen GP1, GP2, GP3 mit Informationen darüber beschrieben, ob die jeweilige Verbindung eine Punkt-zu-Punkt PP- bzw. Punkt-zu-Mehrpunkt MP-Verbindung ist. Die Sende-/Empfangseinrichtung GP3 soll in der Kette im Ausführungsbeispiel die letzte Sende-/Empfangseinrichtung sein, zu der die erste Sende-/Empfangseinrichtung GP0 Nachrichten sendet. In diesem Fall wird in der zweiten Tabelle TAB2 des Koppelfeldanschlußmoduls KAM der Sende/Empfangseinrichtung GP3 eine Punkt-zu-Punkt-Verbindung PP eingetragen.

Der Verbindungsaufbau der virtuellen Verbindung wird durch Aussenden wenigstens einer Quittungszelle durch die jeweilige Sende-/Empfangseinrichtung (GP1 ... GPn) zur ersten Sende-/Empfangseinrichtung GP0 abgeschlossen. Im Anschluß daran werden die entsprechenden Nachrichten in Nachrichtenzellen von der ersten Sende-/Empfangseinrichtung GP0 ausgesendet. Dabei sind im Informationsteil die eigentlichen Nachrichten enthalten, während im Zellenkopf die virtuelle Kanalnummer VCI enthalten ist. Mit dieser virtuellen Kanalnummer wird zunächst die erste Tabelle TAB1 des Koppelfeldanschlußmoduls KAM der ersten Sende-/Empfangseinrichtung GP0 adressiert. Unter der jeweiligen Adresse ist die Ausgangsportadresse des ATM-Koppelfeldes ASN abgespeichert, unter der die Nachrichtenzelle das ATM-Koppelfeld ASN wieder verlassen soll. Sie wird als zusätzlicher Zellenkopf RA dem Zellenkopf der Nachrichtenzelle vorangestellt. Die Nachrichtenzelle besteht nun aus dem Informationsteil, dem Zellenkopf mit der virtuellen Kanalnummer VCI sowie dem zusätzlichen Zellenkopf RA. Nach Verlassen des ATM-Koppelfeldes ASN wird der Nachrichtenzelle dieser zusätzliche Zellenkopf RA wieder entnommen.

Nach Verlassen des ATM-Koppelfeldes ASN wird die Nachrichtenzelle zu dem Koppelfeldanschlußmodul KAM der Sende-/Empfangseinrichtung GP1 weitergeleitet (Figur 3).

Mit der Aufnahme in das Koppelfeldanschlußmodul KAM wird die Nachrichtenzelle - unabhängig davon, ob eine Punkt-zu-Punkt-Verbindung PP bzw. eine Punkt-zu-Mehrpunkt-Verbindung MP gewählt worden ist - zur Sende-/Empfangseinrichtung GP1 weitergeleitet. Gleichzeitig wird mit der virtuellen Kanalnummer VCI des Zellenkopfes die zweite Tabelle TAB2 adressiert. Im Falle einer Punkt-zu-Punkt-Verbindung PP werden keine weiteren Aktionen unternommen. Im Falle einer Punkt-zu-Mehrpunkt-Verbindung MP wird die Nachrichtenzelle dupliziert und auf einen der Eingänge eines Multiplexers SMUX gesendet. Falls die Sende-/Empfangseinrichtung GP1 ihrerseits Nachrichten zu weiteren Sende-/Empfangseinrichtungen sendet, werden die jeweiligen Nachrichtenzellen auf den zweiten Eingang des Multiplexers SMUX gegeben. Am Ausgang des Multiplexers SMUX sind dann die jeweiligen, zu verschiedenen Verbindungen gehörenden Nachrichtenzellen zeitlich hintereinander geschachtelt. Mit der virtuellen Kanalnummer VCI des jeweiligen Zellenkopfes wird dann die erste Tabelle TAB1 adressiert. Die unter der jeweiligen Adresse aufgefundenen Informationen über den weiteren Durchschalteweg im ATM-Koppelfeld ASN werden dann wiederum als zusätzlicher Zellenkopf RA der Nachrichtenzelle vorangestellt. Die duplizierte Nachrichtenzelle wird dann wiederum über den in der ersten Tabelle TAB1 festgelegten Ausgang zur Sende-/Empfangseinrichtung GP2 weitergeleitet, wo sich die soeben beschriebene Vorgehensweise wiederholt. Durch eine derartige Vorgehensweise entsteht somit eine sogenannte virtuelle Kette von Verbindungen. Generell gilt, daß am Ende dieser virtuellen Kette - d.h. also in der letzten Sende-/Empfangseinrichtung, die von der Sendeeinrichtung mit Nachrichten versorgt werden soll (im Ausführungsbeispiel ist dies die Sende-/Empfangseinrichtung GP3) - als Art der Verbindung in der zweiten Tabelle TAB2 eine Punkt-zu-Punkt-Verbindung PP abgespeichert ist. Dadurch wird erreicht, daß eine Duplizierung der jeweiligen Nachrichtenzelle nicht mehr durchgeführt wird.

In einer weiteren Ausgestaltung der Erfindung ist vorgesehen, daß am Ende der virtuellen Kette, also in der letzten Sende-/Empfangseinrichtung - im vorliegenden Ausführungsbeispiel also die Sende-/Empfangseinrichtung GP3 - statt einer Punkt-zu-Punkt-Verbindung PP eine Punkt-zu-Mehrpunkt-Verbindung MP abgespeichert ist. In diesem Fall muß dafür Sorge getragen werden, daß in der ersten Tabelle TAB1 des jeweiligen Koppelfeldanschlußmoduls KAM die Ausgangsportadresse im ATM-Koppelfeld ASN abgespeichert ist, an die die erste Sende-/Empfangseinrichtung GP0 angeschlossen ist. In diesem Fall werden dann die Nachrichtenzellen auch in dem Koppelfeldanschlußmodul KAM der letzten Sende-/Empfangseinrichtung dupliziert und über das ATM-Koppelfeld ASN zurück zur ersten Sende-/Empfangseinrichtung GP0 weitergeleitet. Dort findet dann ein Vergleich der ausgesendeten Nachrichtenzellen mit den auf diesem Wege erhaltenen Nachrichtenzellen über dort ablaufende Vergleichprozeduren statt. In diesem Fall können also Aussagen über die Güte der Durchschaltung gemacht werden. Weiterhin können statistische Qualitätsdaten festgehalten werden, um über längere Zeiträume hinweg Aussagen über die Qualität der Durchschaltung durch das ATM-Koppelfeld machen zu können. Ein möglicher Alterungsprozeß relevanter Bauteile des jeweiligen ATM-Koppelfeldes ASN kann somit frühzeitig entdeckt werden.

In einer weiteren Ausgestaltung der Erfindung ist vorgesehen, daß die Koppelfeldanschlußmodule KAM der jeweiligen Sende-/Empfangseinrichtungen GP0 ... GPn doppelt vorzusehen sind. Damit kann im Fehlerfall - d.h. bei Ausfall eines Koppelfeldanschlußmoduls KAM - dasselbe während der Übertragung der Nachrichten ausgetauscht werden, da in diesem Fall die relevanten Funktionen von dem redundant ausgelegten Koppelfeldanschlußmodul KAM ausgeführt werden. Im weiteren sei darauf hingewiesen, daß die Beschreibung des Ausführungsbeispiels sich auf Sende-/Empfangseinrichtungen eines Kommunikationssystems bezog. Generell sind aber auch andere Sende-/Empfangseinrichtungen möglich, wie beispielsweise Endteilnehmereinrichtungen wie dies bereits in der Beschreibungseinleitung hervorgehoben wurde.

## Patentansprüche

1. Verfahren für Punkt zu Mehrpunkt-Verbindungen in einem selbstroutenden ATM-Koppelfeld (ASN)
- in dem Signalisierungszellen und Nachrichtenzellen, jeweils bestehend aus einem, die zu übertragenden Informationen enthaltenden Informationsteil sowie einem, eine logische Verbindungsinformation enthaltenden Zellenkopf, nach dem ATM-Vermittlungsprinzip durchgeschaltet werden,
- mit wenigstens einer ersten Sende-/Empfangseinrichtung (GP0) sowie einer Gruppe von weiteren Sende-/Empfangseinrichtungen (GP1 ... GPn), die jeweils über ein zu-geordnetes Koppelfeldanschlußmodul (KAM) an das ATM-Koppelfeld (ASN) angeschlossen sind,
**dadurch gekennzeichnet,**
daß von der ersten Sende-/Empfangseinrichtung (GP0) zur Durchführung eines Verbindungsaufbaus zu der Gruppe von weiteren Sende-/Empfangseinrichtungen (GP1 ..., GPn) wenigstens eine Signalisierungszelle ausgesendet wird und in Abhängigkeit von den darin enthaltenen Informationen sowohl in dem Koppelfeldanschlußmodul (KAM) der ersten Sende-/Empfangseinrichtung (GP0) als auch in den Koppelfeldanschlußmodulen (KAM) der Gruppe von weiteren Sende-/Empfangseinrichtungen (GP1 ... GPn) für den Verbindungsweg charakteristische Informationen in eine erste und zweite Tabelle (TAB1, TAB2) unter einer der logischen Verbindungsinformation zugeordneten Adresse aufgenommen werden,
daß mit der, in dem Zellenkopf der von der ersten Sende-/Empfangseinrichtung (GP0) nach dem Verbindungsaufbau ausgesendeten Nachrichtenzellen jeweils enthaltenden logischen Verbindungsinformation die erste Tabelle (TAB1) des dieser Sende-/Empfangseinrichtung (GP0) zugeordneten Koppelfeldanschlußmoduls (KAM) adressiert wird, die unter der jeweiligen Adresse dort abgespeicherten, den weiteren Verbindungsweg betreffenden Informationen in einen zusätzlichen Zellenkopf (RA) abgespeichert und die jeweilige Nachrichtenzelle mit demselben versehen wird,
daß die derart erweiterte Nachrichtenzelle dem ATM-Koppelfeld (ASN) zugeführt und dieses in Abhängigkeit von den im zusätzlichen Zellenkopf (RA) abgespeicherten Informationen in Richtung der ersten Sende-/Empfangseinrichtung der Gruppe von Sende-/Empfangseinrichtungen durchläuft, wobei anschließend der zusätzliche Zellenkopf (RA) von der Nachrichtenzelle wieder entfernt wird,
daß mit der logischen Verbindungsinformation des Zellenkopfes der jeweiligen Nachrichtenzelle in dem Koppelfeldanschlußmodul (KAM) der ersten Sende-/Empfangseinrichtung (GP1) der Gruppe von weiteren Sende-/Empfangseinrichtungen die zweite Tabelle (TAB2) adressiert wird, in der Informationen darüber abgespeichert sind, ob eine Punkt-zu-Punkt (PP) bzw. eine Punkt-zu-Mehrpunktverbindung (MP) von der ersten Sende-/Empfangseinrichtung (GP0) her festgelegt worden ist,
daß die jeweilige Nachrichtenzelle zur ersten Sende-/Empfangseinrichtung (GP1) der Gruppe von weiteren Empfangseinrichtungen weitergeleitet und im Falle einer Punkt-zu-Mehrpunktverbindung (MP) die jeweilige Nachrichtenzelle zusätzlich dupliziert wird,
daß mit der logischen Verbindungsinformation des Zellenkopfes der duplizierten Nachrichtenzelle die erste Tabelle (TAB1) des Koppelfeldanschlußmoduls (KAM) der ersten Sende-/Empfangseinrichtung (GP1) der Gruppe von weiteren Empfangseinrichtungen adressiert wird, die unter der jeweiligen Adresse dort abgespeicherten, den weiteren Verbindungsweg betreffenden Informationen in einen zusätzlichen Zellenkopf (RA) abgespeichert und die jeweilige Nachrichtenzelle mit demselben versehen wird,
daß die derart erweiterte Nachrichtenzelle dem ATM-Koppelfeld (ASN) zugeführt und dieses in Abhängigkeit von dem in den zusätzlichen Zellenkopf (RA) abespeicherten Informationen durchläuft, wobei anschließend der zusätzliche Zellenkopf (RA) wiederum von der Nachrichtenzelle entfernt wird,
daß die Koppelfeldanschlußmodule (KAM) der übrigen Sende-/Empfangseinrichtungen der Gruppe von weiteren Sende-/Empfangseinrichtungen in entsprechender Weise durchlaufen werden, und
daß in der zweiten Tabelle (TAB2) des Koppelanschlußmoduls (KAM), welcher der letzten Sende-/Empfangseinrichtung (GPn) der Gruppe von weiteren Sende-/Empfangseinrichtungen zugeordnet ist, die jeweilige Verbindung als eine Punkt-zu-Punktverbindung (PP) markiert ist.

2. Verfahren nach Anspruch 1,
**dadurch gekennzeichnet,**
daß in der jeweiligen von der ersten Sende-/Empfangseinrichtung (GP0) ausgehenden Signalisierungszelle Informationen bezüglich wenigstens einer Adresse einer Sende-/Empfangseinrichtung der Gruppe von weiteren Sende-/Empfangseinrichtungen (GP1 ... GPn), der maximalen zu übertragenden Bitrate sowie bezüglich des Vorliegens einer Punkt-zu-Punkt (PP) bzw. Punkt-zu-Mehrpunktverbindung (MP) enthalten sind.

3. Verfahren nach Anspruch 1 oder 2,
**dadurch gekennzeichnet,**
daß in der ersten Tabelle (TAB1) des jeweiligen Koppelfeldfeldanschlußmoduls (KAM) Informationen bezüglich des Verbindungsweges in der jeweiligen Koppelstufe des ATM-Koppelfeldes (ASN) gespeichert sind.

4. Verfahren nach Anspruch 1, 2 oder 3,
**dadurch gekennzeichnet,**
daß die duplizierten Nachrichtenzellen zusammen mit gegebenenfalls von der jeweiligen Sende-/Empfangseinrichtung abgegebenen Nachrichtenzellen über einen Multiplexer (SMUX) in Richtung ATM-Koppelfeld (ASN) weitergeleitet werden.

5. Verfahren nach einem der vorhergehenden Ansprüche,
**dadurch gekennzeichnet,**
daß die Koppelfeldanschlußmodule (KAM) jeweils pro Sende-/Empfangseinrichtung gedoppelt vorgesehen werden.

6. Verfahren nach einem der vorhergehenden Ansprüche,
**dadurch gekennzeichnet,**
daß in der zweiten Tabelle (TAB2) des Koppelfeldanschlußmoduls (KAM) der letzten Sende-/Empfangseinrichtung der Gruppe von weiteren Sende-/Empfangseinrichtungen eine Punkt-zu-Mehrpunktverbindung (MP) markiert ist, in der ersten Tabelle (TAB1) desselben Koppelfeldanschlußmoduls (KAM) die Adresse der ersten Sende-/Empfangseinrichtung (GP0) abgelegt ist und die duplizierte Nachrichtenzelle zur ersten Sende-/Empfangseinrichtung (GP0) hin zurückübertragen wird.

7. Verfahren nach Anspruch 6,
**dadurch gekennzeichnet,**
daß in der ersten Sende-/Empfangseinrichtung (GP0) Vergleichsprozeduren ablaufen, um die Güte der Datenübertragung im ATM-Koppelfeld (ASN) zu ermitteln.
